# EUROPÄISCHE PATENTSCHRIFT

(11) **EP 4 198 213 B1**
(45) Veröffentlichungstag und Bekanntmachung des Hinweises auf die Patenterteilung: **07.08.2024**
(21) Anmeldenummer: 22207584.8
(22) Anmeldetag: 15.11.2022
(51) Int. Cl.: E03C 1/04, F16J 15/06

(54) **SANITÄRARMATUR MIT EINER MISCHKARTUSCHE**
SANITARY FITTING WITH A MIXING CARTRIDGE
ROBINETTERIE SANITAIRE DOTÉE D'UNE CARTOUCHE DE MÉLANGE

(30) Priorität: 29.11.2021 DE 102021131208
(43) Veröffentlichungstag der Anmeldung: 21.06.2023
(73) Patentinhaber: Grohe AG, 58675 Hemer (DE)
(72) Erfinder: Voeller, Martin, 58675 Hemer (DE)

(56) Entgegenhaltungen:
- EP-A2- 1 657 366
- DE-A1- 10 246 861
- US-A- 4 682 626

## Beschreibung

Die vorliegende Erfindung betrifft eine Sanitärarmatur, die insbesondere für Waschbecken, Duschen und/oder Badewannen verwendbar ist.

Sanitärarmaturen dienen insbesondere der Bereitstellung von Wasser und/oder dem Mischen von Kaltwasser und Warmwasser zu Mischwasser mit einer gewünschten Mischwassertemperatur sowie der Dosierung des gemischten Mischwassers. Bei bekannten Sanitärarmaturen wird das Wasser von einem Ventil oder das Mischwasser von einer Mischkartusche über Flüssigkeitskanäle in einem Armaturengehäuse zu einer Auslauföffnung eines Auslaufs des Armaturengehäuses geleitet. Das Mischventil kann mithilfe eines Kartuschenadapters in dem Armaturengehäuse der Sanitärarmatur befestigt werden. Hierzu weist der Kartuschenadapter einen Aufnahmeraum für die Mischkartusche auf, wobei die Mischkartusche mit einer unteren Stirnfläche auf einem Boden des Aufnahmeraums sitzt. Über den Boden des Kartuschenadapters ist der Mischkartusche das Kaltwasser und Warmwasser zuführbar sowie das Mischwasser von der Mischkartusche abführbar. Aufgrund ihres komplexen Aufbaus werden Kartuschenadapter regelmäßig als Kunststoffspritzgussteile gefertigt, wodurch diese vergleichsweise großen Fertigungstoleranzen unterliegen. Dies kann während des Betriebs der Sanitärarmatur und/oder bei Funktionstests der Sanitärarmatur, bei denen das Kaltwasser und/oder das Warmwasser der Mischkartusche mit einem Flüssigkeitsdruck von bis zu 50 bar zugeführt wird, dazu führen, dass die Mischkartusche von dem Boden des Aufnahmeraums des Kartuschenadapters abgehoben wird. Hierdurch entsteht zwischen der Mischkartusche und dem Boden des Aufnahmeraums ein Spalt, in den eine zwischen dem Kartuschenadapter und der Mischkartusche angeordnete Dichtung infolge des Flüssigkeitsdrucks gepresst werden kann. Dies kann zu einer Beschädigung der Dichtung führen.

Aufgabe der Erfindung ist es daher, die mit Bezug auf den Stand der Technik geschilderten Probleme zumindest teilweise zu lösen und insbesondere eine Sanitärarmatur anzugeben, bei der eine Beschädigung der Dichtung vermeidbar ist.

Diese Aufgabe wird gelöst mit einer Sanitärarmatur gemäß den Merkmalen des unabhängigen Patentanspruchs. Weitere vorteilhafte Ausgestaltungen der Erfindung sind in den abhängig formulierten Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest Folgendes aufweist:
- ein Armaturengehäuse;
- einen Kartuschenadapter, der in dem Armaturengehäuse angeordnet ist;
- eine Mischkartusche zum Mischen von Kaltwasser und Warmwasser zu Mischwasser, die zumindest teilweise in dem Kartuschenadapter angeordnet ist;
- zumindest eine Dichtung, die zwischen dem Kartuschenadapter und der Mischkartusche angeordnet ist; und
- zumindest ein Stützelement für die zumindest eine Dichtung, das zumindest teilweise in einer Nut des Kartuschenadapters angeordnet ist.

Die vorgeschlagene Sanitärarmatur dient insbesondere dem Mischen von Kaltwasser und Warmwasser zu Mischwasser mit einer gewünschten Mischwassertemperatur und/oder der Dosierung des gemischten Mischwassers. Solche Sanitärarmaturen werden regelmäßig für Spülbecken, Waschbecken, Duschen und/oder Badewannen verwendet. Die Sanitärarmatur weist ein Armaturengehäuse auf, das zumindest teilweise aus Messing, einer Zinklegierung und/oder Kunststoff bestehen kann. Zudem ist das Armaturengehäuse an einem Träger, beispielsweise einer Arbeitsplatte, dem Spülbecken, dem Waschbecken, der Dusche oder der Badewanne, befestigbar. Darüber hinaus kann das Armaturengehäuse einen (hervorstehenden bzw. abzweigenden) Auslauf aufweisen, der starr oder bewegbar mit dem Armaturengehäuse verbunden ist. Der Auslauf kann zumindest teilweise rohrförmig ausgebildet sein. Weiterhin kann das Armaturengehäuse eine dekorative äußere Oberfläche aufweisen. Zudem kann der Auslauf eine Auslauföffnung aufweisen, über die eine Flüssigkeit, insbesondere (Misch-)Wasser, abgebbar ist.

In dem Armaturengehäuse ist ein Kartuschenadapter zur Aufnahme und/oder Befestigung einer Mischkartusche an dem Armaturengehäuse angeordnet. Weiterhin ist der Kartuschenadapter zumindest teilweise rohrförmig ausgebildet, sodass die Mischkartusche zumindest teilweise in dem Kartuschenadapter anordenbar ist. Der rohrförmige Bereich des Kartuschenadapters erstreckt sich insbesondere entlang einer Längsachse. Weiterhin kann der Kartuschenadapter zumindest teilweise aus Messing und/oder Kunststoff bestehen. Zudem kann der Kartuschenadapter als Kunststoffspritzgussteile ausgebildet sein. Der Kartuschenadapter kann direkt oder indirekt, beispielsweise durch weitere Komponenten der Sanitärarmatur, an dem Armaturengehäuse befestigt sein.

Mittels der Mischkartusche ist insbesondere Kaltwasser mit einer Kaltwassertemperatur und Warmwasser mit einer Warmwassertemperatur zu einem Mischwasser mit einer gewünschten Mischwassertemperatur mischbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Die Mischkartusche ist zumindest teilweise in dem Kartuschenadapter und/oder einem Aufnahmeraum des Kartuschenadapters angeordnet oder befestigt. Zudem kann die Mischkartusche mittels eines Hebels der Sanitärarmatur betätigbar sein. Beispielsweise kann mittels des Hebels die Mischwassertemperatur und/oder eine Abgabemenge des Mischwassers einstellbar sein. Die Mischkartusche kann beispielsweise nach Art eines Einhebelmischers und/oder zumindest teilweise zylinderförmig ausgebildet sein. Ferner kann die Mischkartusche ein Kartuschengehäuse aufweisen.

Die Mischkartusche sitzt insbesondere mit einer unteren Stirnfläche auf einem Boden des Aufnahmeraums, sodass insbesondere ein Kaltwassereingang der Kartusche mit einem Kaltwasserzulaufkanal des Kartuschenadapters, ein Warmwassereingang der Kartusche mit einem Warmwasserzulaufkanal des Kartuschenadapters und/oder ein Mischwasserauslass der Mischkartusche mit einem Mischwasserablaufkanal des Kartuschenadapters verbunden sind. Das durch die Mischkartusche gemischte Mischwasser ist von dem Mischwasserauslass der Mischkartusche bzw. dem Mischwasserablaufkanal des Kartuschenadapters insbesondere über zumindest einen Flüssigkeitskanal der Auslauföffnung des Auslaufs zuführbar.

Zwischen dem Kartuschenadapter und der Mischkartusche ist zumindest eine Dichtung angeordnet, die ein Austreten des Kaltwassers, Warmwasser und/oder Mischwassers über einen Spalt zwischen dem Kartuschenadapter und der Mischkartusche verhindert. Die Dichtung kann zumindest teilweise aus einem elastischen Material, wie zum Beispiel Gummi oder Silikon, bestehen. Zudem kann die Dichtung nach Art einer Kulissendichtung oder eines O-Rings ausgebildet sein. Weiterhin kann die Dichtung (insbesondere in einer Längsrichtung, d. h. insbesondere parallel zu der Längsachse des Kartuschenadapters) eine Dichtungslänge von beispielsweise 1 mm (Millimeter) bis 5 mm und/oder (insbesondere in einer radialen Richtung, d. h. insbesondere orthogonal zu der Längsrichtung) eine Dichtungsbreite bzw. Schnurstärke von 1 mm bis 5 mm aufweisen. Zudem kann die zumindest eine Dichtung zumindest teilweise in einer Dichtungsnut der Mischkartusche bzw. des Kartuschengehäuses der Mischkartusche angeordnet sein.

Die Sanitärarmatur weist zumindest ein Stützelement für die zumindest eine Dichtung auf, das zumindest teilweise in einer Nut des Kartuschenadapters angeordnet ist. Das Stützelement kann einteilig mit der Mischkartusche bzw. dem Kartuschengehäuse der Mischkartusche oder als separates Bauteil ausgebildet sein. Wenn es sich bei dem Stützelement um ein separates Bauteil handelt, steht das Stützelement insbesondere mit seiner Oberseite mit der Mischkartusche bzw. der unteren Stirnfläche der Kartusche in Kontakt. Die Oberseite ist insbesondere gerade ausgebildet und/oder erstreckt sich in die radiale Richtung. Das Stützelement besteht zumindest teilweise aus einem (hartem) Kunststoff und/oder Metall. Weiterhin kann das Stützelement (insbesondere in der Längsrichtung) eine Länge von 1 mm bis 5 mm und/oder (insbesondere in der radialen Richtung) eine Breite bzw. Stützelementschnurstärke von 1 mm bis 5 mm aufweisen. Das zumindest eine Stützelement kann die zumindest eine Dichtung ausgehend von der unteren Stirnfläche der Mischkartusche in der Längsrichtung überragen. Das zumindest eine Stützelement stützt die zumindest eine Dichtung derart, dass die zumindest eine Dichtung nicht in einen Spalt zwischen dem Kartuschenadapter und der Mischkartusche drückbar ist, der beispielsweise durch einen Flüssigkeitsdruck des Kaltwassers, Warmwassers und/oder Mischwassers entstehen kann. Möglich ist, dass das zumindest eine Stützelement die zumindest eine Dichtung (räumlich) von dem Spalt trennt, sodass die zumindest eine Dichtung in der radialen Richtung nicht in den Spalt drückbar ist. Hierdurch verhindert das zumindest eine Stützelement eine Beschädigung der zumindest einen Dichtung. Das zumindest eine Stützelement stützt die zumindest eine Dichtung insbesondere in der radialen Richtung und/oder nur in der radialen Richtung. Hierzu ist das zumindest eine Stützelement in der radialen Richtung (im Wesentlichen) starr ausgebildet und/oder nicht bewegbar. Die zumindest eine Dichtung kann durch den Flüssigkeitsdruck des Kaltwassers, Warmwassers und/oder Mischwassers gegen das zumindest eine Stützelement drückbar sein. Somit bzw. insbesondere dient das zumindest einen Stützelement als Anlagefläche für die zumindest eine Dichtung. Zudem ermöglicht das zumindest eine Stützelement eine Herstellung des Kartuschenadapters mit größeren Fertigungstoleranzen, sodass die Herstellkosten sinken.

Die zumindest eine Dichtung kann einen Kaltwasserzulaufkanal, einen Warmwasserzulaufkanal und/oder einen Mischwasserablaufkanal umgeben. Hierzu kann die zumindest eine Dichtung beispielsweise einen ersten Dichtring, zweiten Dichtring und/oder dritten Dichtring umfassen. Die einzelnen Dichtringe können über Verbindungsstege miteinander verbunden sein. Somit kann die zumindest eine Dichtung insbesondere einstückig ausgebildet sein.

Das zumindest eine Stützelement kann sich entlang einer äußeren Umfangsfläche der zumindest einen Dichtung erstrecken. Die äußere Umfangsfläche der zumindest einen Dichtung ist insbesondere in die radiale Richtung orientiert. Dies kann beispielsweise bedeuten, dass das Stützelement (vollständig) einer äußeren Kontur der zumindest einen Dichtung folgt. Weiterhin kann dies beispielsweise bedeuten, dass das Stützelement die äußere Umfangsfläche der zumindest einen Dichtung (insbesondere über ihren gesamten Verlauf) kontaktiert.

Das zumindest eine Stützelement kann einen Spalt zwischen dem Kartuschenadapter und der Mischkartusche überdecken. Insbesondere kann das zumindest eine Stützelement den Spalt in der radialen Richtung überdecken.

Das zumindest eine Stützelement kann zumindest teilweise einer Bewegung der Mischkartusche folgen. Dies kann insbesondere bedeuten, dass sich das zumindest eine Stützelement (insgesamt oder zumindest in einem Abschnitt) bei einer Bewegung der Mischkartusche (insbesondere in der Längsrichtung) mit der Mischkartusche (insbesondere in der Längsrichtung) mitbewegen kann, sodass das zumindest eine Stützelement stets mit der Mischkartusche bzw. einer unteren Stirnfläche der Mischkartusche in Kontakt steht.

Das zumindest eine Stützelement kann der Bewegung der Mischkartusche (insbesondere in der Längsrichtung) über eine Strecke von bis zu 1 mm folgen. Bewegt sich die Mischkartusche in der Längsrichtung um mehr als 0 mm bis 1 mm, sodass die untere Stirnfläche der Mischkartusche von dem Boden des Kartuschenadapters in der Längsrichtung mehr als 0 mm bis 1 mm beabstandet ist und somit ein Spalt entsteht, folgt das zumindest eine Stützelement der Bewegung der Mischkartusche, um die zumindest eine Dichtung in der radialen Richtung von dem Spalt zu trennen.

Die Sanitärarmatur kann zumindest eine Feder aufweisen, die das zumindest eine Stützelement gegen die Mischkartusche drückt. Somit kann das zumindest eine Stützelement der Bewegung der Mischkartusche insbesondere mithilfe der Feder folgen.

Die zumindest eine Feder kann in der Nut angeordnet sein. Die zumindest eine Feder kann sich insbesondere an einem Nutgrund der Nut abstützen. Weiterhin kann die zumindest eine Feder nach Art einer Biegefeder ausgebildet sein.

Die zumindest eine Feder kann nach Art eines Federarms ausgebildet sein. Der Federarm kann mit einem ersten längsseitigen Ende an dem zumindest einen Stützelement befestigt sein und sich mit einem zweiten längsseitigen Ende bzw. mit einem auskragendem Ende auf dem Nutgrund der Nut abstützen. Der Federarm kann nach Art eines Biegearms ausgebildet sein.

Die zumindest eine Feder kann einstückig mit dem zumindest einen Stützelement ausgebildet sein. Dies ist besonders leicht insbesondere dann möglich, wenn die zumindest eine Feder nach Art des Federarms ausgebildet ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Sanitärarmatur in einer Explosionsdarstellung;
- Fig. 2:: ein Kartuschenadapter mit einer Mischkartusche der Sanitärarmatur in einem Längsschnitt;
- Fig. 3:: der Kartuschenadapter mit der Mischkartusche in einer Detailansicht;
- Fig. 4:: ein Stützelement für eine Dichtung der Sanitärarmatur in einer perspektivischen Darstellung;
- Fig. 5:: eine Detailansicht des Stützelements in einer perspektivischen Darstellung; und
- Fig. 6:: die Dichtung in einer perspektivischen Darstellung.

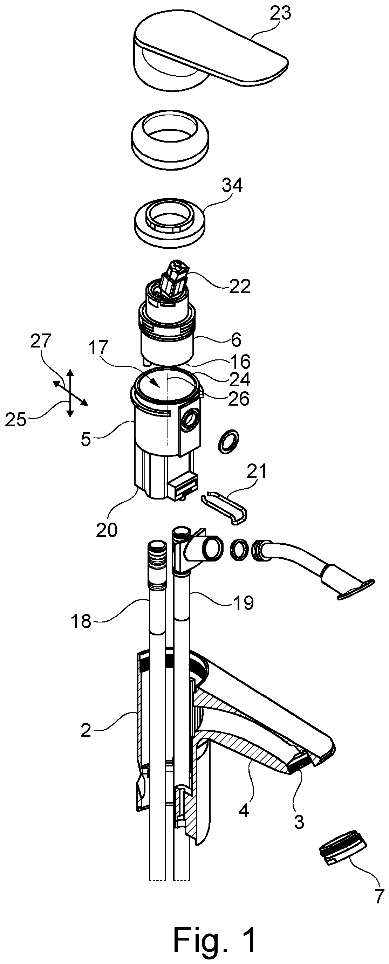

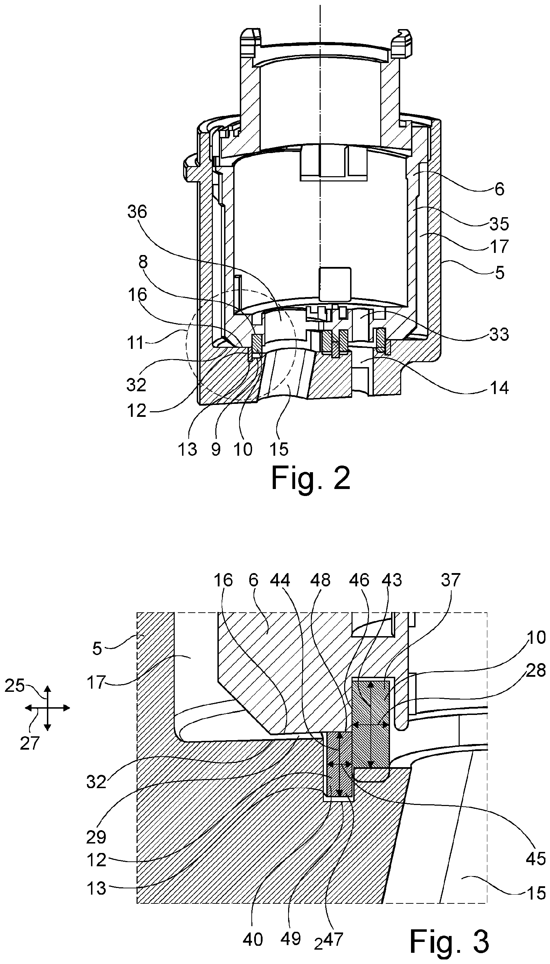

Die Fig. 1 zeigt eine Sanitärarmatur 1 in einer Explosionsdarstellung. Die Sanitärarmatur 1 weist ein Armaturengehäuse 2 mit einem eine Auslauföffnung 3 aufweisenden Auslauf 4 auf. In dem Armaturengehäuse 2 ist ein Kartuschenadapter 5 angeordnet, der zur Aufnahme einer Mischkartusche 6 einen Aufnahmeraum 17 aufweist. Der Aufnahmeraum 17 erstreckt sich in einer Längsrichtung 25 von einer oberen Stirnfläche 24 des Kartuschenadapters 5 bis zu einem in der Fig. 2 sichtbaren Boden 32 des Aufnahmeraums 17 innerhalb des Kartuschenadapters 5. Die Längsrichtung 25 erstreckt sich parallel zu einer Längsachse 26 des Kartuschenadapters 5, des Aufnahmeraums 17 und/oder der Mischkartusche 6. Der Kartuschenadapter 5 ist im Bereich des Aufnahmeraums 17 rohrförmig ausgebildet. Die Mischkartusche 6 weist eine untere Stirnfläche 16 auf, mit der die Mischkartusche 6 auf dem Boden 32 des Aufnahmeraums 17 des Kartuschenadapters 5 sitzt. In dem Kartuschenadapter 5 sind ein hier nicht zu erkennender Kaltwasserzulaufkanal und ein in der Fig. 2 zu erkennender Warmwasserzulaufkanal 14 ausgebildet, die sich von einer Kartuschenadapterunterseite 20 des Kartuschenadapters 5 bis zu dem Boden 32 des Aufnahmeraums 17 erstrecken. Eine Kaltwasserleitung 18 ist an der Kartuschenadapterunterseite 20 des Kartuschenadapters 5 mit dem Kaltwasserzulaufkanal und eine Warmwasserleitung 19 an der Kartuschenadapterunterseite 20 des Kartuschenadapters 5 mit dem Warmwasserzulaufkanal 14 verbindbar. Weiterhin sind die Kaltwasserleitung 18 und die Warmwasserleitung 19 mit einer in den Kartuschenadapter 5 einsteckbaren Klammer 21 sicherbar, sodass sich die Kaltwasserleitung 18 nicht aus dem Kaltwasserzulaufkanal und die Warmwasserleitung 19 nicht aus dem Warmwasserzulaufkanal 14 des Kartuschenadapters 5 lösen kann. Der Kaltwasserzulaufkanal und der Warmwasserzulaufkanal 14 des Kartuschenadapters 5 münden an dem Boden 32 des Aufnahmeraums 17 in einen Kaltwassereingang und Warmwassereingang 33 der Mischkartusche 6 (vgl. Fig. 2). Der Kaltwassereingang und der Warmwassereingang 33 sind an der unteren Stirnfläche 16 der Mischkartusche 6 ausgebildet. Innerhalb der Mischkartusche 6 sind Kaltwasser und Warmwasser zu Mischwasser mit einer gewünschten Mischwassertemperatur mischbar. Zur Einstellung der Mischwassertemperatur und einer Abgabemenge des Mischwassers durch die Sanitärarmatur 1 weist die Mischkartusche 6 ein Betätigungselement 22 auf, das mit einem Hebel 23 verbunden ist. Im montierten Zustand wird die Mischkartusche 6 mit einem Verschlusselement 34 auf den in der Fig. 2 gezeigten Boden 32 des Aufnahmeraums 17 gedrückt.

Die Fig. 2 zeigt den Kartuschenadapter 5 mit der Mischkartusche 6 in einem Längsschnitt, wobei in der Fig. 2 aus Vereinfachungsgründen nur ein Kartuschengehäuse 35 der Mischkartusche 6 dargestellt ist. Das durch die Mischkartusche 6 gemischte Mischwasser tritt an der unteren Stirnfläche 16 aus einem Mischwasserauslass 36 der Mischkartusche 6 in einen Mischwasserablaufkanal 15 des Kartuschenadapters 5 und wird von diesem über einen hier nicht dargestellten Flüssigkeitskanal zu der in der Fig. 1 gezeigten Auslauföffnung 3 des Armaturengehäuses 2 geführt. In der Auslauföffnung 3 ist ein Mousseur 7 angeordnet, durch den das Mischwasser den Auslauf 4 verlässt. Zwischen dem Kartuschenadapter 5 und der Mischkartusche 6 befindet sich eine Dichtung 10, die in einer in der unteren Stirnfläche 16 der Mischkartusche 6 ausgebildeten ersten Dichtungsnut 8 und einer in dem Boden 32 des Aufnahmeraums 17 des Kartuschenadapters 5 ausgebildeten zweiten Dichtungsnut 9 angeordnet ist. Zudem befindet sich zwischen der unteren Stirnfläche 16 der Mischkartusche 6 und dem Kartuschenadapter 5 ein Stützelement 12 für die Dichtung 10, das in einer in dem Boden 32 des Aufnahmeraums 17 des Kartuschenadapters 5 ausgebildeten Nut 13 angeordnet ist.

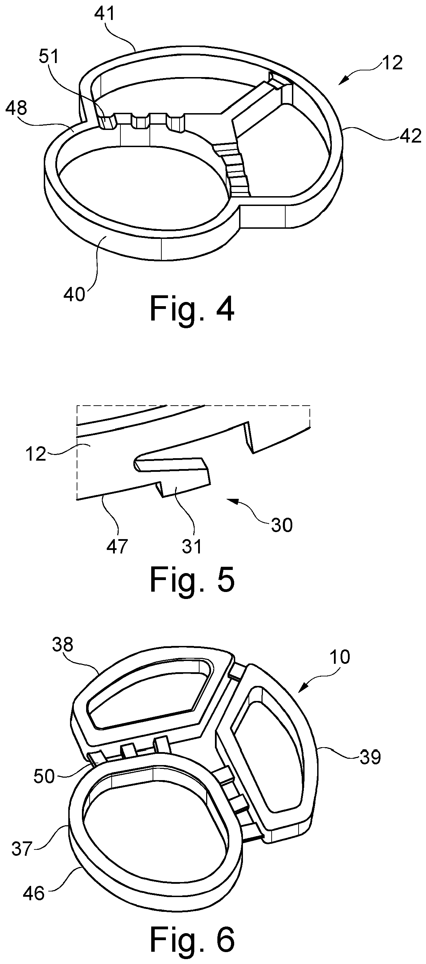

Die Fig. 3 zeigt eine Detailansicht des Kartuschenadapters 5 mit der Mischkartusche 6 in einem in der Fig. 2 mit einem Kreis 11 gekennzeichneten Bereich. Der in der Fig. 2 und 3 gezeigte Längsschnitt verläuft durch einen ersten Stützring 40 des Stützelements 12 (vgl. Fig. 4) und einen ersten Dichtungsring 37 der Dichtung 10 (vgl. Fig. 6). Der erste Stützring 40 des Stützelements 12 und der erste Dichtungsring 37 der Dichtung 10 erstrecken sich um den Mischwasserablaufkanal 15. Die Dichtung 10 weist in der Längsrichtung 25 eine Dichtungslänge 43 und in einer radialen Richtung 27, d. h. orthogonal zu der Längsrichtung 25, eine Dichtungsbreite 28 auf. Das Stützelement 12 weist in der Längsrichtung 25 eine Länge 44 und in der radialen Richtung 27 eine Breite 45 auf. Während des Betriebs oder eines Funktionstests der in der Fig. 1 gezeigten Sanitärarmatur 1 kann infolge eines Flüssigkeitsdrucks des Kaltwassers, Warmwassers und/oder Mischwassers ein Spalt 29 zwischen der unteren Stirnfläche 16 der Mischkartusche 6 und dem Boden 32 des Aufnahmeraums 17 des Kartuschenadapters 5 entstehen. Durch das Stützelement 12 ist verhinderbar, dass die Dichtung 10 infolge des Flüssigkeitsdrucks in der radialen Richtung 27 in den Spalt 29 gedrückt wird. Hierzu erstreckt sich das Stützelement 12 entlang einer äußeren Umfangsfläche 46 der Dichtung 10. Das Stützelement 12 weist an einer Unterseite 47 eine Mehrzahl von in der Fig. 5 gezeigten Federn 30 auf, durch die das Stützelement 12 mit seiner Oberseite 48 gegen die untere Stirnfläche 16 der Mischkartusche 6 gedrückt wird. Die Federn 30 stützen sich an einem Nutgrund 49 der Nut 13 ab. Hierdurch kann das Stützelement 12 einer Bewegung der Mischkartusche 6 in der Längsrichtung 25 folgen, sodass zwischen dem Stützelement 12 und der Mischkartusche 6 kein Spalt entstehen kann, in den die Dichtung 10 gedrückt werden könnte.

Die Fig. 4 zeigt das Stützelement 12 in einer perspektivischen Darstellung. Das Stützelement 12 umfasst den ersten Stützring 40, einen zweiten Stützring 41 und einen dritten Stützring 42. Der erste Stützring 40 umgibt den in der Fig. 2 und 3 gezeigten Mischwasserablaufkanal 15, der zweite Stützring 41 den in der Fig. 2 gezeigten Warmwasserzulaufkanal 14 und der dritte Stützring 42 den in den Figuren nicht gezeigten Kaltwasserzulaufkanal.

Die Fig. 5 zeigt eine der Mehrzahl von Federn 30 des Stützelements 12, die nach Art eines Federarms 31 an der Unterseite 47 des Stützelement 12 ausgebildet ist.

Die Fig. 6 zeigt die Dichtung 10 in einer perspektivischen Darstellung. Die Dichtung 10 umfasst den ersten Dichtring 37, einen zweiten Dichtring 38 und einen dritten Dichtring 39. Der erste Dichtring 37 umgibt den in den Fig. 2 und 3 gezeigten Mischwasserablaufkanal 15 der zweite Dichtring 38 den in der Fig. 2 gezeigten Warmwasserzulaufkanal 14 und der dritte Dichtring 39 den in den Figuren nicht gezeigten Kaltwasserzulaufkanal. Die äußere Umfangsfläche 46 des ersten Dichtrings 37 wird durch den in der Fig. 4 gezeigten ersten Stützring 40, die äußere Umfangsfläche 46 des zweiten Dichtrings 38 durch den in der Fig. 4 gezeigten zweiten Stützring 41 und die äußere Umfangsfläche 46 des dritten Dichtrings 39 durch den in der Fig. 4 gezeigten dritten Stützring 42 des Stützelements 12 umgeben. Die Dichtringe 37, 38, 39 sind untereinander über Verbindungsstege 50 verbunden, für die das Stützelement 12 an seiner Oberseite 48 in der Fig. 4 gezeigte Verbindungsschlitze 51 aufweist.

Durch die vorliegende Erfindung ist eine Beschädigung der Dichtung 10 vermeidbar.

### Bezugszeichenliste

- 1: Sanitärarmatur
- 2: Armaturengehäuse
- 3: Auslauföffnung
- 4: Auslauf
- 5: Kartuschenadapter
- 6: Mischkartusche
- 7: Mousseur
- 8: erste Dichtungsnut
- 9: zweite Dichtungsnut
- 10: Dichtung
- 11: Kreis
- 12: Stützelement
- 13: Nut
- 14: Warmwasserzulaufkanal
- 15: Mischwasserablaufkanal
- 16: untere Stirnfläche
- 17: Aufnahmeraum
- 18: Kaltwasserleitung
- 19: Warmwasserleitung
- 20: Kartuschenadapterunterseite
- 21: Klammer
- 22: Betätigungselement
- 23: Hebel
- 24: obere Stirnfläche
- 25: Längsrichtung
- 26: Längsachse
- 27: radiale Richtung
- 28: Dichtungsbreite
- 29: Spalt
- 30: Feder
- 31: Federarm
- 32: Boden
- 33: Warmwassereingang
- 34: Verschlusselement
- 35: Kartuschengehäuse
- 36: Mischwasserauslass
- 37: erste Dichtring
- 38: zweiter Dichtring
- 39: dritter Dichtring
- 40: erster Stützring
- 41: zweiter Stützring
- 42: dritter Stützring
- 43: Dichtungslänge
- 44: Länge
- 45: Breite
- 46: Umfangsfläche
- 47: Unterseite
- 48: Oberseite
- 49: Nutgrund
- 50: Verbindungssteg
- 51: Verbindungsschlitz

## Patentansprüche

1. Sanitärarmatur (1), zumindest aufweisend:
- ein Armaturengehäuse (2);
- einen Kartuschenadapter (5), der in dem Armaturengehäuse (2) angeordnet ist;
- eine Mischkartusche (6) zum Mischen von Kaltwasser und Warmwasser zu Mischwasser, die zumindest teilweise in dem Kartuschenadapter (5) angeordnet ist;
- zumindest eine Dichtung (10), die zwischen dem Kartuschenadapter (5) und der Mischkartusche (6) angeordnet ist; **gekennzeichnet durch**
- zumindest ein Stützelement (12) für die zumindest eine Dichtung (10), das zumindest teilweise in einer Nut (13) des Kartuschenadapters (5) angeordnet ist.

2. Sanitärarmatur (1) nach Patentanspruch 1, wobei die zumindest eine Dichtung (10) einen Kaltwasserzulaufkanal, einen Warmwasserzulaufkanal (14) oder einen Mischwasserablaufkanal (15) umgibt.

3. Sanitärarmatur (1) nach einem der vorhergehenden Patentansprüche, wobei sich das zumindest eine Stützelement (12) entlang einer äußeren Umfangsfläche (46) der zumindest einen Dichtung (10) erstreckt.

4. Sanitärarmatur (1) nach einem der vorhergehenden Patentansprüche, wobei das zumindest eine Stützelement (12) einen Spalt (29) zwischen dem Kartuschenadapter (5) und der Mischkartusche (6) überdeckt.

5. Sanitärarmatur (1) nach einem der vorhergehenden Patentansprüche, wobei das zumindest eine Stützelement (12) zumindest teilweise einer Bewegung der Mischkartusche (6) folgen kann.

6. Sanitärarmatur (1) nach Patentanspruch 5, wobei das zumindest eine Stützelement (12) der Bewegung der Mischkartusche (6) über eine Strecke von bis zu 1 mm folgen kann.

7. Sanitärarmatur (1) nach einem der vorhergehenden Patentansprüche, aufweisend zumindest eine Feder (30), die das zumindest eine Stützelement (12) gegen die Mischkartusche (6) drückt.

8. Sanitärarmatur (1) nach Patentanspruch 7, wobei die zumindest eine Feder (30) in der Nut (13) angeordnet ist.

9. Sanitärarmatur nach Patentanspruch 7 oder 8, wobei die zumindest eine Feder (30) nach Art eines Federarms (31) ausgebildet ist.

10. Sanitärarmatur (1) nach einem der Patentansprüche 7 bis 9, wobei die zumindest eine Feder (30) einstückig mit dem zumindest einen Stützelement (12) ausgebildet ist.

## Claims

1. A sanitary fitting (1), having at least
- a fitting housing (2);
- a cartridge adapter (5), which is arranged in the fitting housing (2);
- a mixing cartridge (6) for mixing cold water and hot water to form mixed water, which is arranged at least partially in the cartridge adapter (5);
- at least one seal (10), which is arranged between the cartridge adapter (5) and the mixing cartridge (6); **characterized by**
- at least one supporting element (12) for the at least one seal (10), which supporting element is arranged at least partially in a groove (13) of the cartridge adapter (5).

2. The sanitary fitting (1) according to claim 1, wherein the at least one seal (10) surrounds a cold water inlet channel, a hot water inlet channel (14) or a mixed water outlet channel (15).

3. The sanitary fitting (1) according to any one of the preceding claims, wherein the at least one supporting element (12) extends along an outer circumferential surface (46) of the at least one seal (10).

4. The sanitary fitting (1) according to any one of the preceding claims, wherein the at least one supporting element (12) covers a gap (29) between the cartridge adapter (5) and the mixing cartridge (6).

5. The sanitary fitting (1) according to any one of the preceding patent claims, wherein the at least one supporting element (12) can at least partially follow a movement of the mixing cartridge (6).

6. The sanitary fitting (1) according to claim 5, wherein the at least one supporting element (12) can follow the movement of the mixing cartridge (6) over a distance of up to 1 mm.

7. The sanitary fitting (1) according to any one of the preceding claims, having at least one spring (30) which presses the at least one supporting element (12) against the mixing cartridge (6).

8. The sanitary fitting (1) according to claim 7, wherein the at least one spring (30) is arranged in the groove (13) .

9. The sanitary fitting according to claim 7 or 8, wherein the at least one spring (30) is formed in the manner of a spring arm (31).

10. The sanitary fitting (1) according to any one of claims 7 to 9, wherein the at least one spring (30) is formed integrally with the at least one supporting element (12) .

## Revendications

1. Robinetterie sanitaire (1), comportant au moins :
- un corps de robinetterie (2) ;
- un adaptateur (5) de cartouche, qui est placé dans le corps de robinetterie (2) ;
- une cartouche mélangeuse (6), destinée à mélanger de l'eau froide et de l'eau chaude en une eau mitigée, qui est placée au moins partiellement dans l'adaptateur (5) de cartouche ;
- au moins un joint (10), qui est placé entre l'adaptateur (5) de cartouche et la cartouche mélangeuse (6); **caractérisée par**
- au moins un élément de support (12) pour l'au moins un joint (10), qui est placé au moins partiellement dans une rainure (13) de l'adaptateur (5) de cartouche.

2. Robinetterie sanitaire (1) selon la revendication 1 du brevet, l'au moins un joint (10) entourant une canalisation d'alimentation d'eau froide, une canalisation d'alimentation (14) d'eau chaude ou une canalisation d'alimentation (15) d'eau mitigée.

3. Robinetterie sanitaire (1) selon l'une quelconque des revendications précédentes du brevet, l'au moins un élément de support (12) s'étendant le long d'une surface périphérique (46) extérieure de l'au moins un joint (10).

4. Robinetterie sanitaire (1) selon l'une quelconque des revendications précédentes du brevet, l'au moins un élément de support (12) recouvrant une fente (29) entre l'adaptateur (5) de cartouche et la cartouche mélangeuse (6).

5. Robinetterie sanitaire (1) selon l'une quelconque des revendications précédentes du brevet, l'au moins un élément de support (12) pouvant suivre au moins partiellement un déplacement de la cartouche mélangeuse (6).

6. Robinetterie sanitaire (1) selon la revendication 5 du brevet, l'au moins un élément de support (12) pouvant suivre le déplacement de la cartouche mélangeuse (6) sur un trajet de jusqu'à 1 mm.

7. Robinetterie sanitaire (1) selon l'une quelconque des revendications précédentes du brevet, comportant au moins un ressort (30), qui pousse l'au moins un élément de support (12) contre la cartouche mélangeuse (6) .

8. Robinetterie sanitaire (1) selon la revendication 7 du brevet, l'au moins un ressort (30) étant placé dans la rainure (13).

9. Robinetterie sanitaire selon la revendication 7 ou 8 du brevet, l'au moins un ressort (30) étant conçu à la manière d'un bras de ressort (31).

10. Robinetterie sanitaire (1) selon l'une quelconque des revendications 7 à 9 du brevet, l'au moins un ressort (30) étant conçu en monobloc avec l'au moins un élément de support (12).
